# EUROPÄISCHE PATENTSCHRIFT

(11) **EP 2 684 714 B1**
(45) Veröffentlichungstag und Bekanntmachung des Hinweises auf die Patenterteilung: **27.08.2014**
(21) Anmeldenummer: 13000729.7
(22) Anmeldetag: 13.02.2013
(51) Int. Cl.: B60G 7/00, B60G 9/00

(54) **Vierpunktlenker zur Anbindung einer Starrachse an den Rahmen eines Nutzfahrzeugs**
Four point linkage for the connection of a rigid axle to the frame of a commercial vehicle
Bielle à quatre points destinée à la fixation d'un essieu rigide sur le châssis d'un véhicule utilitaire

(30) Priorität: 10.07.2012 DE 102012013694
(43) Veröffentlichungstag der Anmeldung: 15.01.2014
(73) Patentinhaber: MAN Truck & Bus AG, 80995 München (DE)
(72) Erfinder: Stiermann, Erwin, 86356 Neusäss (DE)

(56) Entgegenhaltungen:
- EP-A1- 1 787 833
- EP-A2- 0 949 093
- EP-B1- 0 776 275
- WO-A1-99/58354
- WO-A1-03/039893
- DE-A1-102007 022 411
- US-A1- 2005 248 113

## Beschreibung

Die Erfindung betrifft einen Vierpunktlenker zur Anbindung einer Starrachse an den Rahmen eines Nutzfahrzeugs nach dem Oberbegriff des Patentanspruchs 1.

Vierpunktlenker sind im Nutzfahrzeugbau bekannt. Sie vereinigen eine Vielzahl von Funktionen und Aufgaben in einem Bauteil, für deren Erfüllung vor Einführung von Vierpunktlenkern wenigstens zwei Längslenker, ein Dreieckslenker und ein Stabilisator zur Achsführung notwendig waren. Ein solcher Vierpunktlenker wird in der EP 0 949 093 A2 beschrieben.

Im Zusammenspiel mit anderen vorhandenen Längslenkern dient der Vierpunktlenker am Nutzfahrzeug der Achsführung in Quer- und Längsrichtung sowie zusätzlich zur Momentenabstützung und zur Querstabilisierung. Eine darüber hinausgehende Wankstabilisierung mithilfe eines zusätzlichen Stabilisators ist nicht mehr erforderlich.

Aus der EP 0 776 275 B1 ist eine Achsaufhängung für Nutzfahrzeuge bekannt, bei der zwei Längslenker und ein Vierpunktlenker einerseits mit der Fahrzeugachse und andererseits mit dem Fahrzeugaufbau verbunden sind. Der Vierpunktlenker ist - wie Fig. 5 zeigt - als verwindbares Kreuz ausgebildet, wobei zwei Kreuzarme durch Kugelgelenke mit Anlenkstellen am Fahrzeugrahmen und zwei weitere Kreuzarme durch Kugelgelenke mit der Fahrzeugachse verbunden sind.

Solche aus Grau- oder Sphäroguss oder auch als Gesenkschmiedeteil aus Stahl gefertigte Vierpunktlenker haben jedoch ein hohes Eigengewicht.

Der Erfindung liegt daher die Aufgabe zugrunde, einen Vierpunktlenker für ein Nutzfahrzeug zu schaffen, der unter Beibehaltung der an sich bekannten Vorteile über ein reduziertes Gesamtgewicht verfügt.

Die Aufgabe wird durch die Merkmale des Patentanspruchs 1 gelöst.

Ein Vierpunktlenker verbindet eine Achse, insbesondere eine Starrachse, mit einem Fahrgestellrahmen eines Nutzfahrzeugs. Der Vierpunktlenker ist dabei in Draufsicht X-förmig ausgebildet. Vom Zentralbereich des Vierpunktlenkers stehen vier Arme nach außen ab, an deren äußeren Enden jeweils ein Lagerauge angeordnet ist. Relativ zu einer quer zur Fahrtrichtung verlaufenden gedachten Querachse sind in Fahrtrichtung gesehen zwei Lageraugen des Vierpunktlenkers mit Anlenkstellen des Fahrgestellrahmens und weitere zwei Lageraugen des Vierpunktlenkers mit Anlenkstellen der Starrachse verbunden. Jeder Arm weist annähernd parallel zueinander verlaufende Außenflächen auf. Die Außenflächen eines Arms stehen über bogenförmig gekrümmte Außenflächen des Zentralbereichs mit den Außenflächen der jeweils benachbarten Arme in Verbindung. Im Zentralbereich ist ein Durchbruch vorgesehen, der über vier bogenförmige Wandabschnitte verfügt, die weitgehend parallel zu den jeweils benachbarten Außenflächen des Zentralbereichs verlaufen. Unter Bildung von vier gekrümmten Übergangsbögen verlaufen die bogenförmigen Wandabschnitte in einem Abstand zueinander, der in etwa dem Abstand der Außenflächen der Arme zueinander entspricht.

Die vorliegende Erfindung ist sowohl auf angetriebene als auch auf nicht angetriebene Starrachsen anwendbar, die auch als Nachlauf- oder Vorlaufachsen verwendet sein können. In Draufsicht weist der Durchbruch die Form eines Karos auf. Je zwei einander gegenüberliegende Arme können auf einer gedachten Achse liegen. Die vier Arme liegen miteinander in einer gemeinsamen gedachten Ebene, wobei sich eine Breite des Arms jeweils entweder in der Ebene oder alternativ senkrecht zu dieser Ebene erstrecken kann. Die Erfindung erweist sich insofern als vorteilhaft, als das Eigengewicht des Vierpunktlenkers reduziert ist.

In einer Ausführungsform der Erfindung haben die Arme einen in etwa rechteckigen Querschnitt, wobei die Breite des jeweiligen Arms größer ist als eine Armdicke. Die Armdicke bezeichnet dabei einen Abstand der Außenflächen des Arms senkrecht zur jeweiligen Armbreite. Der Querschnitt des Arms kann dabei quadratisch sein. Die Kanten der Arme können zur Verringerung der Verletzungsgefahr abgerundet sein.

Eine weitere Ausführungsform der Erfindung sieht vor, dass jeder Übergangsbogen im Zentralbereich jeweils die gleiche Dicke hat wie die vier sich jeweils anschließenden Arme.

Zusätzlich kann vorgesehen sein, dass zumindest die seitlichen Außenflächen der Arme - abweichend von einem absolut rechteckigen Querschnitt - nach außen konvex gewölbt sind. Denkbar ist jedoch auch, dass die oberen und die unteren Außenflächen der Arme konvex nach außen gewölbt sind. Weiterhin ist vorstellbar, dass die oberen und die unteren Außenflächen der Arme - abweichend von einem absolut rechteckigen Querschnitt - konkav nach innen gewölbt sind. Die konkave Ausbildung trägt zur Gewichtsreduzierung des Vierpunktlenkers bei.

Bei schweren Nutzfahrzeugen hingegen können bestimmte Armbereiche des Vierpunktlenkers durch gezielte Materialverstärkungen konvex ausgebildet sein. Eine zumindest bereichsweise konvex oder konkav gewölbte Außenfläche der Arme ermöglicht eine bedarfsgerechte Anpassung des Vierpunktlenkers an die von ihm aufzunehmenden Kräfte. Die Materialverstärkung kann über die gesamte Armlänge oder nur bereichsweise, z.B. im Übergang des Arms zum Zentralbereich des Vierpunktlenkers vorgesehen sein.

Eine weitere vorteilhafte Ausbildung der Erfindung sieht vor, dass die Dicke der Arme, ausgehend von den Lageraugen zu den Übergangsbögen des Zentralbereichs hin kontinuierlich oder nach einer e-Funktion zunimmt. Die Ober- und Unterseiten der Übergangsbögen verlaufen im Bereich der Gesamtlänge der Arme und im Bereich der Übergangsbögen mit einer größten Dicke d zueinander parallel. Dabei ist vorstellbar, dass die Dicke des Arms, ausgehend vom Lagerauge zum Zentralbereich des Vierpunktlenkers hin zunimmt, während die Breite des Arms konstant bleibt. Eine derartige Ausbildung des Vierpunktlenkers ermöglicht eine optimale Anpassung der Arme an die Schub- und Biegungskräfte, die, ausgehend vom Fahrgestellrahmen und/oder von der Achse auf die Arme des Vierpunktlenkers einwirken. Ein derartig ausgebildeter Vierpunktlenker ist in der Lage, auch erhöhten Torsionsbelastungen Stand zu halten.

Was die Herstellung anbelangt, so kann der Vierpunktlenker z.B. als Gesenkschmiedeteil gefertigt sein. Während der Fertigung ist der Vierpunktlenker gesamtumfänglich vom Gesenkwerkzeug umschlossen. Vierpunktlenker, die in Form eines Gelenkschmiedeteils hergestellt werden, haben in der Regel einen günstigen Faserverlauf und zeichnen sich durch eine verminderte Rissempfindlichkeit aus, wodurch insgesamt die Bauteilsicherheit zunimmt.

In einer alternativen Ausführungsform kann der Vierpunktlenker als Gussteil hergestellt werden, z.B. aus Grauguss (GG), Sphäroguss (GGG) sowie aus einer Stahl- oder einer Leichtmetalllegierung.

In einer weiteren Ausführungsform der Erfindung ist vorgesehen, dass der Vierpunktlenker in Sandwichbauweise aus verschiedenen, miteinander verklebten Laminatschichten besteht. Das Laminat kann unterschiedliche Materialien umfassen, wie z.B. Kunststoffe, faserverstärkte Schichten sowie Schichten aus Metall. Ein Laminat bezeichnet dabei einen Werkstoff, der aus zwei oder mehreren flächig miteinander verklebten Schichten besteht, wobei die Schichten aus gleichen oder unterschiedlichen Materialien bestehen können. Ein Laminat-Verbundträger vereinigt als fertiges Bauteil in sich die Eigenschaften aller Materialkomponenten. An höher belasteten Stellen kann der Laminat-Vierpunktlenker im Laminat verstärkt werden. Die Zugfestigkeit der Arme des Vierpunktlenkers lässt sich dadurch erhöhen, dass die Faserrichtung der Lastrichtung entspricht, der die Arme des Vierpunktlenkers zukünftig ausgesetzt sind.

Bei einem in Sandwichbauweise gefertigten Vierpunktlenker weisen die Lageraugen einen rechteckigen oder quadratischen Querschnitt auf, der von jeweils einer Lagerbohrung durchdrungen ist. Die zueinander parallelen Ober- und Unterseiten der Lageraugen sind von äußeren Laminatschichten der Arme übergriffen und mit diesen verklebt. Weiterhin ist es denkbar, im Bereich der Lageraugen die Laminatschichten der Arme durch zusätzliche form- und/oder kraftschlüssige Maßnahmen ortsfest zu sichern.

Eine weitere Ausführungsform der Erfindung sieht vor, den Vierpunktlenker aus Karbon oder einem kohlefaserverstärkten Kunststoff herzustellen. Grundsätzlich ist der erfindungsgemäße Vierpunktlenker in seiner Form, Herstellungsart, Material und Dimension auf den jeweiligen Anwendungsfall am Fahrzeug, also die auftretenden Kräfte und Momente abgestellt, die es von ihm aufzunehmen gilt.

Die Erfindung wird nachfolgend anhand einer bevorzugten Ausführungsform unter Bezugnahme auf die Zeichnung näher beschrieben. Hierbei zeigen:
- Fig. 1: in Draufsicht den erfindungsgemäßen Vierpunktlenker,
- Fig. 2: seitlich geschnitten einen Arm des Vierpunktlenkers, dessen obere und untere Außenflächen konkav gewölbt sind, wogegen die seitlichen Außenflächen des Arms eine konvexe Wölbung zeigen,
- Fig. 3: seitlich geschnitten einen Arm des Vierpunktlenkers, bei dem sowohl die oberen und unteren Außenflächen als auch die seitlichen Außenflächen konvex gewölbt sind und
- Fig. 4: einen Schnitt durch den Vierpunktlenker entsprechend Fig. 1 entlang den Schnittlinien AA.

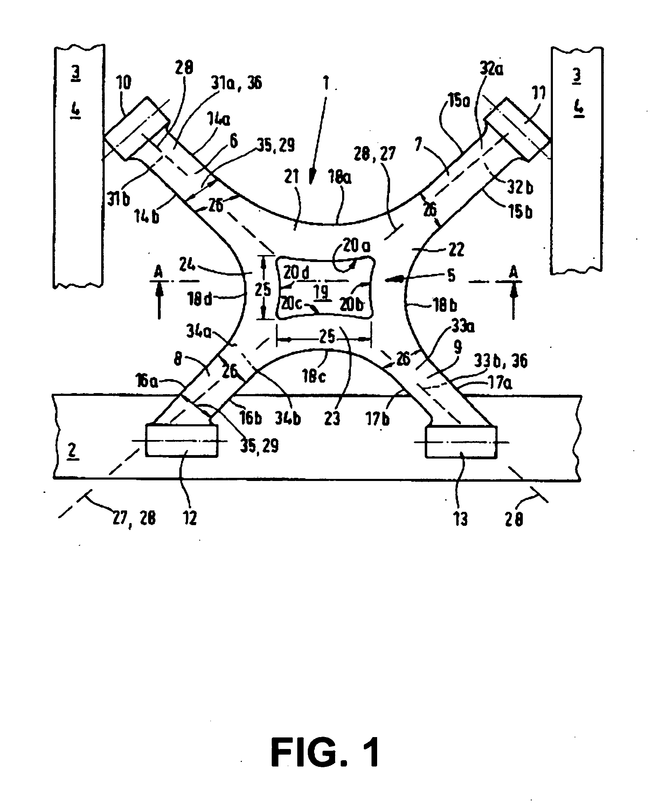

Fig. 1 zeigt in Draufsicht einen Vierpunktlenker (1) zur Anbindung einer Starrachse (2) an einen Fahrgestellrahmen (3) eines Nutzfahrzeugs (4). Der Vierpunktlenker (1) weist einen Zentralbereich (5) auf, von dem Arme (6, 7, 8, 9) sternförmig abragen, die außen Lageraugen (10, 11, 12, 13) aufweisen. Zwei Lageraugen (10, 11) dienen der Verbindung des Vierpunktlenkers (1) mit nicht dargestellten Anlenkstellen am Fahrgestellrahmen (3), wogegen die Lageraugen (12, 13) zur Verbindung zwischen dem Vierpunktlenker (1) und (nicht dargestellten) Anlenkstellen an der Achse (2) dienen. Der jeweilige Anschluss erfolgt in der Regel über ein so genanntes Pratzengelenk, das im Inneren eines Lagerauges ein Gummi-Metall-Lager aufweist. Die Arme (6, 7, 8, 9) weisen seitliche Außenflächen (14A, 14B; 15A, 15B; 16A, 16B; 17A, 17B) auf, die jeweils annähernd parallel zueinander verlaufen. Die jeweils benachbart zueinander angeordneten Arme (6, 7, 8, 9) sind über bogenförmig gekrümmte Außenflächen (18A, 18B, 18C, 18D) des Zentralbereichs (5) miteinander verbunden. Die jeweiligen Außenflächen (14A, 14B; 15A, 15B; 16A, 16B; 17A, 17B) der jeweiligen Arme (6, 7, 8, 9) gehen über die bogenförmig gekrümmten Außenflächen (18A, 18B, 18C, 18D) des Zentralbereichs (5) in die jeweils anschließenden Außenflächen (14A, 14B; 15A, 15B; 16A, 16B; 17A, 17B) der jeweils benachbarten Arme (6, 7, 8, 9) über.

Im Zentralbereich (5) des Vierpunktlenkers (1) ist ein Durchbruch (19) vorgesehen, der vier bogenförmige Wandabschnitte (20A, 20B, 20C, 20D) umfasst. Die Wandabschnitte (20A, 20B, 20C, 20D) erstrecken sich weitgehend parallel zu den jeweils benachbarten Außenflächen (18A, 18B, 18C, 18D) des Zentralbereichs (5). Die Wandabschnitte (20A, 20B, 20C, 20D) verlaufen in einem Abstand (25) zueinander, der zumindest annähernd demjenigen Abstand (26) der Außenflächen (14A, 14B; 15A, 15B; 16A, 16B; 17A, 17B) der Arme (6, 7, 8, 9) entspricht. Im Bereich des Zentralbereichs (5) des Vierpunktlenkers (1) sind zwischen den Wandabschnitten (20A, 20B, 20C, 20D) und den Außenflächen (18A, 18B, 18C, 18D) gekrümmte Übergangsbögen (21, 22, 23, 24) erkennbar. Die Arme (6, 7, 8, 9) des Vierpunktlenkers (1) führen sternförmig vom Zentralbereich (5) weg, wobei je zwei Arme (6, 9) und (7, 8) jeweils auf einer gedachten Achse (27) liegen. Im Beispiel der Fig. 1 liegen die Arme (6, 7, 8, 9) und der Zentralbereich (5) des Vierpunktlenkers (1) in einer gemeinsamen Ebene (28). Die Arme (6, 7, 8, 9) haben einen annähernd rechteckigen Querschnitt (35), wobei eine Breite (29) der Arme (6, 7, 8, 9) größer ist als eine Dicke (30) (nicht gezeigt) der Arme (6, 7, 8, 9). Im Bereich der Übergangsbögen (21, 22, 23, 24) entspricht die Dicke (30) des Zentralbereichs (5) des Vierpunktlenkers (1) der Dicke (30) der sich an den Zentralbereich (5) anschließenden Arme (6, 7, 8, 9). Je nach Ausführungsform des Vierpunktlenkers (1) können die seitlichen Außenflächen (14A, 14B; 15A, 15B; 16A, 16B; 17A, 17B) und/oder die oberen und unteren Außenflächen (31A, 31 B; 32A, 32B; 33A, 33B; 34A, 34B) der Arme (6, 7, 8, 9) nach außen konvex (36) oder nach innen konkav gewölbt sein. Die Dicke (30) der Arme (6, 7, 8, 9) nimmt, ausgehend von den Lageraugen (10, 11, 12, 13), zu den Übergangsbögen (21, 22, 23, 24) hin zu. Die Ober- und Unterseiten (31A, 31B; 32A, 32B; 33A, 33B; 34A, 34B) der Arme (6, 7, 8, 9) stimmen in Bezug auf ihre Dicke (30) mit der Dicke (30) der Übergangsbögen (21, 22, 23, 24) überein.

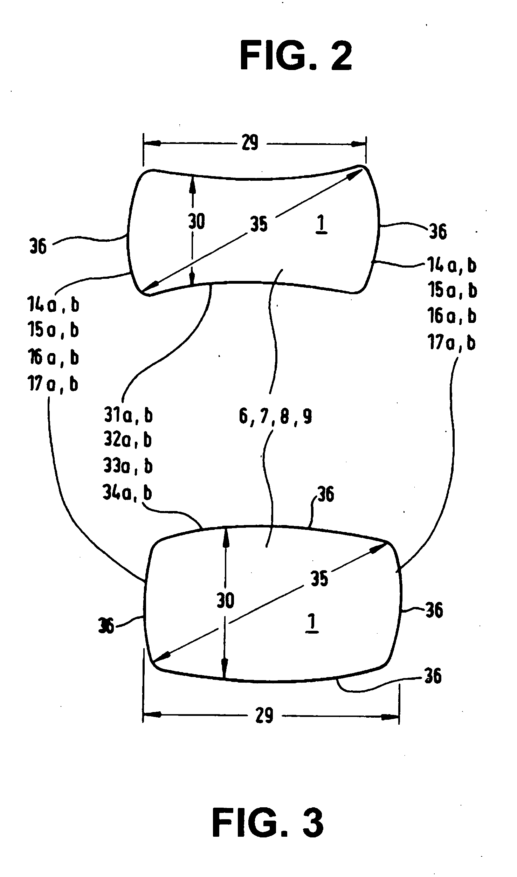

Fig. 2 zeigt seitlich geschnitten einen Arm (6, 7, 8, 9) des Vierpunktlenkers (1) mit einer Breite (29) und einer Dicke (30). Im Querschnitt (35) weist der Arm (6, 7, 8, 9) in Fig. 2 einander gegenüberliegend konvex (36) gewölbte seitliche Außenflächen (14A, 14B; 15A, 15B; 16A, 16B; 17A, 17B) auf, wogegen die jeweils obere und untere Außenfläche (31A, 31B; 32A, 32B; 33A, 33B; 34A, 34B) des Arms (6, 7, 8, 9) jeweils konkav gewölbt sind. Sowohl in Fig. 2 als auch in Fig. 3 ist die Breite (29) des jeweiligen Arms (6, 7, 8, 9) größer als die jeweilige Armdicke (30). Die jeweiligen Auswölbungen der Außenflächen (14A, 14B; 15A, 15B; 16A, 16B; 17A, 17B) der Arme (6, 7, 8, 9) sind nur beispielhaft gemeint. Erfindungsgemäß können die unteren/oberen sowie die seitlichen Außenflächen (31A, 31B; 32A, 32B; 33A, 33B; 34A, 34B) und (14A, 14B; 15A, 15B; 16A, 16B; 17A, 17B) konvexe (36) und konkave Auswölbungen in anderen Kombinationen aufweisen. In beiden Fig. 2 und 3 ist der jeweilige Arm (6, 7, 8, 9) jeweils mit einem annähernd rechteckigen Querschnitt (35) dargestellt.

Fig. 3 zeigt im Querschnitt (35) die seitlichen Außenflächen (14A, 14B; 15A, 15B; 16A, 16B; 17A, 17B) und die unteren bzw. oberen Außenflächen (31 A, 31 B; 32A, 32B; 33A, 33B; 34A, 34B) mit konvexer Auswölbung (36). In beiden Fig. 2 und 3 verlaufen die einander gegenüberliegenden seitlichen Außenflächen (14A, 14B; 15A, 15B; 16A, 16B; 17A, 17B) und die obere bzw. untere Außenfläche (31A, 31B; 32A, 32B; 33A, 33B; 34A, 34B) jeweils in etwa parallel zueinander.

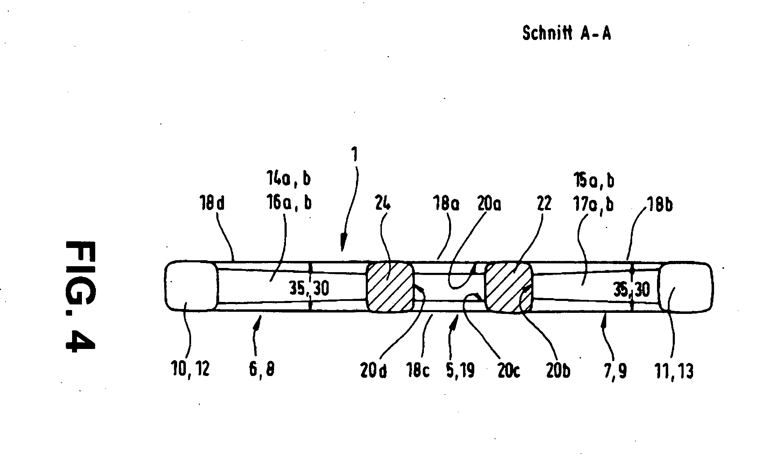

Fig. 4 zeigt einen Schnitt durch den Vierpunktlenker (1) entsprechend den Schnittlinien AA, dargestellt in Fig. 1. Sternförmig vom Zentralbereich (5) gehen die Arme (6, 7, 8, 9) ab. An den jeweiligen Außenenden der Arme (6, 7, 8, 9) sind die Lageraugen (10, 11, 12, 13) dargestellt. Die seitlichen Außenflächen (14A, 14B; 15A, 15B; 16A, 16B; 17A, 17B) der Arme (6, 7, 8, 9) gehen über bogenförmig gekrümmte Außenflächen (18A, 18B, 18C, 18D) des Zentralbereichs (5) in die anschließenden Außenflächen (14A, 14B; 15A, 15B; 16A, 16B; 17A, 17B) der benachbarten Arme (6, 7, 8, 9) über. Der Durchbruch (19) im Zentralbereich (5) umfasst die bogenförmigen Wandabschnitte (20A, 20B, 20C, 20D), in deren Bereich jeweils ein Übergangsbogen (21, 22, 23, 24) vorgesehen ist. Die Arme (6, 7, 8, 9) weisen einen annähernd rechteckigen Querschnitt (35) auf, und sind in ihrer Breite (29) größer als in ihrer jeweiligen Dicke (30). In Bezug auf die jeweilige Dicke (30) stimmen die Übergangsbögen (21, 22, 23, 24) des Zentralbereichs (5) mit den sich jeweils anschließenden Armen (6, 7, 8, 9) überein. Ausgehend von den Lageraugen (10, 11, 12, 13) bis zu den Übergangsbögen (21, 22, 23, 24) nimmt die Dicke (30) der Arme (6, 7, 8, 9) kontinuierlich zu. Im Bereich des Durchbruchs (19) erstrecken sich die Ober- und Unterseiten der Übergangsbögen (21, 22, 23, 24) zueinander parallel.

### BEZUGSZIFFERN

- 1: Vierpunktlenker
- 2: Achse
- 3: Fahrgestellrahmen
- 4: Nutzfahrzeug
- 5: Zentralbereich
- 6, 7, 8, 9: Arm
- 10, 11, 12, 13: Lagerauge
- 14A, 14B; 15A, 15B; 16A, 16B; 17A, 17B: seitliche Außenfläche des Arms
- 18A, 18B, 18C, 18D: Außenfläche des Zentralbereichs
- 19: Durchbruch
- 20A, 20B, 20C, 20D: Wandabschnitt
- 21, 22, 23, 24: Übergangsbogen
- 25: Abstand Wandabschnitte
- 26: Abstand seitliche Außenflächen
- 27: Gedachte Achse der Arme
- 28: Ebene
- 29: Breite des Arms
- 30: Dicke des Arms
- 31A, 31 B; 32A, 32B; 33A, 33B; 34A, 34B: Obere/untere Außenfläche des Arms
- 35: Querschnitt
- 36: Konvexe Auswölbung des Arms

## Patentansprüche

1. Vierpunktlenker (1) zur Anbindung einer Starrachse (2) an den Fahrgestellrahmen (3) eines Nutzfahrzeugs (4), wobei der Vierpunktlenker (1) in Draufsicht X-förmig ausgebildet ist und aus vier von einem Zentralbereich (5) abgehenden Armen (6, 7, 8, 9) mit außenendigen Lageraugen (10, 11, 12, 13) besteht, von denen zwei (8, 9) mit Anlenkstellen an der Starrachse (2) und zwei (6, 7) mit Anlenkstellen am Fahrgestellrahmen (3) des Fahrzeugs verbunden sind, wobei der Vierpunktlenker (1) eine Querführungsfunktion, eine Stabilisierungsfunktion gegen Wankbewegungen und eine Längsführungsfunktion für die Starrachse (2) hat, **dadurch gekennzeichnet, dass**
die annähernd parallel zueinander verlaufenden Außenflächen (14A, 14B; 15A, 15B; 16A, 16B; 17A, 17B) jedes Armes (6, 7, 8, 9) über bogenförmig gekrümmte Außenflächen (18A, 18B, 18C, 18D) des Zentralbereiches (5) in die anschließenden Außenflächen (14A, 14B; 15A, 15B; 16A, 16B; 17A, 17B) der benachbarten Arme (6, 7, 8, 9) übergehen und
dass der Zentralbereich (5) einen zentralen karoförmigen Durchbruch (19) aufweist, dessen vier bogenförmige Wandabschnitte (20A, 20B, 20C, 20D) weitgehend parallel zu den jeweils benachbarten Zentralbereich-Außenflächen (18A, 18B, 18C, 18D) und unter Bildung von vier gekrümmten Übergangsbögen (21, 22, 23, 24) in einem Abstand (25) zueinander verlaufen, der zumindest annähernd dem Abstand (26) der Außenflächen (14A, 14B; 15A, 15B; 16A, 16B; 17A, 17B) der Arme (6, 7, 8, 9) entspricht.

2. Vierpunktlenker nach Anspruch 1, **dadurch gekennzeichnet, dass** dessen Arme (6, 7, 8, 9) einen annähernd rechteckigen Querschnitt (35) aufweisen, wobei die Breite (29) der Arme jeweils größer als deren Dicke (30) ist.

3. Vierpunktlenker nach Anspruch 2, **dadurch gekennzeichnet, dass** die Übergangsbögen (21, 22, 23, 24) des Zentralbereiches (5) die gleiche Dicke (30) haben wie die vier jeweils anschließenden Arme (6, 7, 8, 9).

4. Vierpunktlenker nach Anspruch 2, **dadurch gekennzeichnet, dass** zumindest die seitlichen Außenflächen (14A, 14B; 15A, 15B; 16A, 16B; 17A, 17B) von dessen Armen (6, 7, 8, 9) - abweichend von einem absolut rechteckigen Querschnitt (35) - nach außen konvex (36) gewölbt sind.

5. Vierpunktlenker nach Anspruch 4, **dadurch gekennzeichnet, dass** auch die oberen und unteren Außenflächen (31 A, 31 B; 32A, 32B; 33A, 33B; 34A, 34B) von dessen Armen (6, 7, 8, 9) konvex (36) nach außen gewölbt sind.

6. Vierpunktlenker nach den Ansprüchen 2 und 4, **dadurch gekennzeichnet, dass** die oberen und unteren Außenflächen (31 A, 31 B; 32A, 32B; 33A, 33B; 34A, 34B) der Arme (6, 7, 8, 9) - abweichend von einem absolut rechteckigen Querschnitt (35) - konkav nach innen gewölbt sind.

7. Vierpunktlenker nach einem der Ansprüche 2 und 4 - 6, **dadurch gekennzeichnet, dass** die Dicke (30) der Arme (6, 7, 8, 9), ausgehend von den Lageraugen (10, 11, 12, 13), zu den Übergangsbögen (21, 22, 23, 24) des Zentralbereiches (5) hin kontinuierlich oder nach einer e-Funktion zunimmt und anschließend die Ober- und Unterseiten der Übergangsbögen (21, 22, 23, 24) mit der dann größten Dicke (d; 30) parallel zueinander verlaufen.

8. Vierpunktlenker nach Anspruch 1, **dadurch gekennzeichnet, dass** dieser durch ein Gesenkschmiedeteil realisiert ist.

9. Vierpunktlenker nach Anspruch 1, **dadurch gekennzeichnet, dass** dieser als Gussteil aus geeignetem Grauguss, Stahlguss oder einer Leichtmetalllegierung realisiert ist.

10. Vierpunktlenker nach Anspruch 1, **dadurch gekennzeichnet, dass** der Vierpunktlenker (1) in Sandwichbauweise aus verschiedenen miteinander verklebten Laminatschichten aus unterschiedlichen Materialien, einschließlich Kunststoffen, auch faserverstärkten Schichten und Metallschichten, zusammengesetzt ist.

11. Vierpunktlenker nach Anspruch 10, **dadurch gekennzeichnet, dass** im Fall der Sandwichbauweise die Lageraugen (10, 11, 12, 13) einen rechteckigen oder quadratischen Querschnitt (35) aufweisen, der von jeweils einer Lagerbohrung durchdrungen ist, und dass die zueinander parallelen Ober- und Unterseiten dieser Lageraugen (10, 11, 12, 13) von äußeren Laminatschichten der Arme (6, 7, 8, 9) übergriffen und mit diesen verklebt sowie erforderlichenfalls durch zusätzliche form- und/oder kraftschlüssige Maßnahmen bzw. Mittel in diesen ortsfest gesichert sind.

12. Vierpunktlenker nach Anspruch 1, **dadurch gekennzeichnet, dass** der Vierpunktlenker (1) einteilig aus Karbon bzw. kohlefaserverstärktem Kunststoff realisiert ist.

## Claims

1. A four-point linkage (1) for the connection of a rigid axle (2) to the frame (3) of a commercial vehicle (4), wherein the four-point linkage (1) is of X-shaped design in top view and consists of four arms (6, 7, 8, 9) emerging from a central region (5) and having bearing eyes (10, 11, 12, 13) at the outer ends, two (8, 9) of which bearing eyes are connected to the rigid axle (2) by articulation points and two (6, 7) are connected to the frame (3) of the vehicle by articulation points, wherein the four-point linkage (1) has a transverse guidance function, a stabilizing function against rolling motions and a longitudinal guidance function for the rigid axle (2), **characterized in that** the outer surfaces (14A, 14B; 15A, 15B; 16A, 16B; 17A, 17B), which run approximately parallel to one another, of each arm (6, 7, 8, 9) merge via arcuately curved outer surfaces (18A, 18B, 18C, 18D) of the central region (5) into the adjoining outer surfaces (14A, 14B; 15A, 15B; 16A, 16B; 17A, 17B) of the adjacent arms (6, 7, 8, 9), and **in that** the central region (5) has a central, square-shaped aperture (19), the four arcuate wall sections (20A, 20B, 20C, 20D) run substantially parallel to the respectively adjacent central-region outer surfaces (18A, 18B, 18C, 18D) and, with the formation of four curved transition arcs (21, 22, 23, 24), run at a distance (25) from one another that least approximately corresponds to the distance (26) between the outer surfaces (14A, 14B; 15A, 15B; 16A, 16B; 17A, 17B) of the arms (6, 7, 8, 9).

2. The four-point linkage according to Claim 1, **characterized in that** the arms (6, 7, 8, 9) of said four-point linkage have an approximately rectangular cross section (35), wherein the width (29) of the arms is in each case greater than the thickness (30) thereof.

3. The four-point linkage according to Claim 2, **characterized in that** the transition arcs (21, 22, 23, 24) of the central region (5) have the same thickness (30) as the four respectively adjoining arms (6, 7, 8, 9).

4. The four-point linkage according to Claim 2, **characterized in that** at least the lateral outer surfaces (14A, 14B; 15A, 15B; 16A, 16B; 17A, 17B) of the arms (6, 7, 8, 9) of said four-point linkage are arched convexly (36) outwards - in a departure from an absolutely rectangular cross section (35).

5. The four-point linkage according to Claim 4, **characterized in that** the upper and lower outer surfaces (31A, 31B; 32A, 32B; 33A, 33B; 34A, 34B) of the arms (6, 7, 8, 9) of said four-point linkage (1) are also arched convexly (36) outwards.

6. The four-point linkage according to Claims 2 and 4, **characterized in that** the upper and lower outer surfaces (31A, 31B; 32A, 32B; 33A, 33B; 34A, 34B) of the arms (6, 7, 8, 9) are arched concavely inwards - in a departure from an absolutely rectangular cross section (35).

7. The four-point linkage according to one of Claims 2 and 4 - 6, **characterized in that** the thickness (30) of the arms (6, 7, 8, 9) increases continuously, or according to an exponential function, from the bearing eyes (10, 11, 12, 13) towards the transition arcs (21, 22, 23, 24) of the central region (5) and then the upper and lower sides of the transition arcs (21, 22, 23, 24,) with the then greatest thickness (d; 30) run parallel to one another.

8. The four-point linkage according to Claim 1 **characterized in that** said four-point linkage is realized by means of a die-formed part.

9. The four-point linkage according to Claim 1 **characterized in that** said four-point linkage is realized as a cast part made from a suitable grey cast iron casting, steel casting or a light metal alloy.

10. The four-point linkage according to Claim 1 **characterized in that** the four-point linkage (1) is assembled in a sandwich construction from various laminate layers which are adhesively bonded to one another and are composed of different materials, including plastics, and also fibre-reinforced layers and metal layers.

11. The four-point linkage according to Claim 10 **characterized in that**, in the case of the sandwich construction, the bearing eyes (10, 11, 12, 13) have a rectangular or square cross section (35) which is penetrated by one bearing bore in each case, and **in that** the mutually parallel upper and lower sides of said bearing eyes (10, 11, 12, 13) are engaged over by outer laminate layers of the arms (6, 7, 8, 9) and are adhesively bonded to said laminate layers and, if required, are secured in a positionally fixed manner therein by additional form-fitting and/or frictional measures or means.

12. The four-point linkage according to Claim 1 **characterized in that** the four-point linkage (1) is realized as a single part composed of carbon or carbon-fibre-reinforced plastic.

## Revendications

1. Bielle à quatre points (1) destinée à la liaison d'un essieu rigide (2) au châssis (3) d'un véhicule utilitaire (4), la bielle à quatre points (1) étant réalisée en forme de X en vue de dessus et se composant de quatre bras (6, 7, 8, 9) partant d'une région centrale (5) avec des trous de palier (10, 11, 12, 13) à l'extrémité extérieure, dont deux (8, 9) sont connectés à des points d'articulation sur l'essieu rigide (2) et deux (6, 7) sont connectés à des points d'articulation sur le châssis (3) du véhicule, la bielle à quatre points (1) ayant une fonction de guidage transversal, une fonction de stabilisation contre les mouvements d'oscillation et une fonction de guidage longitudinal pour l'essieu rigide (2), **caractérisée en ce que** les surfaces extérieures (14A, 14B ; 15A, 15B ; 16A, 16B ; 17A, 17B) de chaque bras (6, 7, 8, 9) s'étendant approximativement parallèlement les unes aux autres se prolongent par le biais de surfaces extérieures courbées en forme d'arc (18A, 18B, 18C, 18D) de la région centrale (5) dans les surfaces extérieures (14A, 14B ; 15A, 15B ; 16A, 16B ; 17A, 17B) s'y raccordant des bras adjacents (6, 7, 8, 9) et
**en ce que** la région centrale (5) présente un orifice central en forme de losange (19) dont les quatre portions de paroi de forme courbe (20A, 20B, 20C, 20D) s'étendent essentiellement parallèlement aux surfaces extérieures respectivement adjacentes (18A, 18B, 18C, 18D) de la région centrale et en formant quatre arcs de transition courbes (21, 22, 23, 24) à une distance (25) les unes par rapport aux autres qui correspond au moins approximativement à la distance (26) des surfaces extérieures (14A, 14B ; 15A, 15B ; 16A, 16B ; 17A, 17B) des bras (6, 7, 8, 9).

2. Bielle à quatre points selon la revendication 1, **caractérisée en ce que** ses bras (6, 7, 8, 9) présentent une section transversale (35) approximativement rectangulaire, la largeur (29) des bras étant à chaque fois supérieure à leur épaisseur (30).

3. Bielle à quatre points selon la revendication 2, **caractérisée en ce que** les arcs de transition (21, 22, 23, 24) de la région centrale (5) ont la même épaisseur (30) que les quatre bras respectifs s'y raccordant (6, 7, 8, 9).

4. Bielle à quatre points selon la revendication 2, **caractérisée en ce qu'**au moins les surfaces extérieures latérales (14A, 14B ; 15A, 15B ; 16A, 16B ; 17A, 17B) sont cintrées de manière convexe vers l'extérieur (36) depuis les bras de celles-ci (6, 7, 8, 9) - en s'écartant d'une section transversale (35) absolument rectangulaire.

5. Bielle à quatre points selon la revendication 4, **caractérisée en ce que** les surfaces extérieures supérieure et inférieure (31A, 31 B ; 32A, 32B ; 33A, 33B ; 34A, 34B) des bras de celle-ci (6, 7, 8, 9) sont cintrées vers l'extérieur de manière convexe (36).

6. Bielle à quatre points selon les revendications 2 et 4, **caractérisée en ce que** les surfaces extérieures supérieure et inférieure (31A, 31 B ; 32A, 32B ; 33A, 33B ; 34A, 34B) des bras (6, 7, 8, 9) - en s'écartant d'une section transversale absolument rectangulaire (35) - sont cintrés de manière concave vers l'intérieur.

7. Bielle à quatre points selon l'une quelconque des revendications 2 et 4 à 6, **caractérisée en ce que** l'épaisseur (30) des bras (6, 7, 8, 9), partant des trous de palier (10, 11, 12, 13) vers les arcs de transition (21, 22, 23, 24) de la région centrale (5), augmente de manière continue ou suivant une fonction exponentielle et ensuite les côtés supérieurs et inférieurs des arcs de transition (21, 22, 23, 24) s'étendent parallèlement les uns aux autres avec l'épaisseur alors supérieure (d ; 30).

8. Bielle à quatre points selon la revendication 1, **caractérisée en ce que** celle-ci est réalisée par une pièce matricée à chaud.

9. Bielle à quatre points selon la revendication 1, **caractérisée en ce que** celle-ci est réalisée sous forme de pièce coulée en fonte grise, en fonte d'acier ou en un alliage de métal léger, de manière appropriée.

10. Bielle à quatre points selon la revendication 1, **caractérisée en ce que** la bielle à quatre points (1) est assemblée suivant une construction en sandwich constituée de différentes couches stratifiées collées les unes aux autres formées de différents matériaux, y compris des matières plastiques, et des couches renforcées par des fibres ainsi que des couches métalliques.

11. Bielle à quatre points selon la revendication 10, **caractérisée en ce que** dans le cas de la construction en sandwich, les trous de palier (10, 11, 12, 13) présentent une section transversale (35) rectangulaire ou quadrilatérale qui est traversée par un trou de palier respectif et **en ce que** les côtés parallèles supérieur et inférieur de ces trous de palier (10, 11, 12, 13) sont contactés par le dessus par des couches stratifiées extérieures des bras (6, 7, 8, 9) et sont collés à celles-ci et, le cas échéant sont fixés dans celles-ci par des mesures ou des moyens supplémentaires d'engagement par correspondance de forme et/ou par force.

12. Bielle articulée à quatre points selon la revendication 1, **caractérisée en ce que** la bielle articulée à quatre points (1) est réalisée d'une seule pièce en carbone ou en plastique renforcé par des fibres de carbone.
